# EUROPEAN PATENT SPECIFICATION

(11) **EP 2 693 749 B1**
(45) Date of publication and mention of the grant of the patent: **03.03.2021**
(21) Application number: 12764394.8
(22) Date of filing: 28.03.2012
(51) Int. Cl.: H04N 7/173, H04N 21/478, H04N 21/4788, H04N 21/8547, H04N 21/858, H04N 21/41, H04N 21/462, H04N 21/4722, H04N 21/482, H04N 21/84

(54) **DETAILED INFORMATION MANAGEMENT SYSTEM**
SYSTEM FÜR DETAILLIERTE INFORMATIONSVERWALTUNG
SYSTÈME DE GESTION D'INFORMATIONS DÉTAILLÉES

(30) Priority: 28.03.2011 JP 2011069509
(43) Date of publication of application: 05.02.2014
(73) Proprietor: Dentsu Inc., Tokyo 105-7001 (JP)
(72) Inventor: IIJIMA, Akio, Tokyo 105-7001 (JP); KISHI, Yuki, Tokyo 105-7001 (JP); MORI, Naoki, Tokyo 105-7001 (JP); YOSHIDA, Kentaro, Tokyo 105-7001 (JP); NAKAZAWA, Daisuke, Tokyo 105-7001 (JP)
(74) Representative: Gill Jennings & Every LLP
(86) International application number: PCT/JP2012/058086
(87) International publication number: WO 2012/133503

(56) References cited:
- JP-A- 2008 028 529
- JP-A- 2010 041 617
- JP-A- 2010 136 138
- US-A1- 2002 184 624
- US-A1- 2008 168 514
- US-A1- 2009 055 383
- US-A1- 2009 199 098
- US-A1- 2009 228 921
- US-A1- 2010 037 260
- US-A1- 2010 162 333

## Description

### Technical Field

The present invention relates to a detailed information management system configured so that detailed information pertaining to television programs or the like being viewed can be retrieved in a simple operation.

### Background Art

Conventionally, when it is desirable to know detailed information about a television program being viewed, such as the cast members, the production staff of the television program, or the merchandise used on the program, a search is carried out using a search engine based on a key word or words corresponding to the respective ones described above.

### Prior Art References

### Patent References

Patent Document 1: JP-A-2002-024250
Patent Document 2: JP-A-2005-222369
Patent Document 3: JP-A-2008-294943
Patent Document 4: US 2009/228921 A1
Patent Document 5: US 2002/184624 A1
Patent Document 6: US 2009/199098 A1
Patent Document 7: US 2008/168514 A1
Patent Document 8: US 2010/037260 A1
Patent Document 9: US 2010/162333 A1
Patent Document 10: US 2009/055383 A1

Patent Document 4 discloses a content presentation device in which the distributor of a video content can present to a viewer the information which the distributor intends, by adding to and changing the information to present at the time of distribution so that the information may match the content of the video content to distribute, wherein a content matching information presentation server is provided to acquire metadata included in a video content broadcasted by a content provider, to search a keyword based on the metadata, and to compose and distribute the screen with the embedded link information linking to information which is closely related to the hit keyword and which is specified by the distributor of the video content.

Patent Document 8 discloses a handheld terminal that includes a device communication unit which communicates with at least one or more broadcasting reception apparatus receiving contents and content information about the contents from a content provider and receives the content information from the broadcasting reception apparatus, a content display unit which displays the content information received from the broadcasting reception apparatus, a server communication unit which communicates with an information providing server which manages related information relating to the contents and receives the related information relating to the content information received from the broadcasting reception apparatus from the information providing server, and a related information display unit which displays the related information received from the information providing server.

### Disclosure of Invention

### Problem To Be Solved By The Invention

However, the conventional detailed information search method described above have had the problem such that detailed information linked to a viewed scene could not be displayed in real time in a simple operation, for all of live broadcast programs, recorded programs, on-demand content, and package content viewable on a television or the like.

In view of the above-described problem of the conventional art, it is therefore an object of the present invention to provide a detailed information management system configured so that detailed information linked to the viewed scene is displayed in real-time on a display of a terminal device such as a remote controller at hand, in a simple operation, for all of live broadcast programs, recorded programs, on demand content, and package content viewable on a television or the like.

### Means for Resolving the Problem

The aforementioned object of the present invention can be accomplished by a detailed information management system, comprising: a monitor device configured to view a content; a monitor management device comprising a content information management part connected to the monitor device, and configured to acquire a content discrimination data corresponding to a content being viewed by a user on the monitor device, and to output the acquired content discrimination data; a service management device configured to input the content discrimination data outputted from the monitor management device, and to extract a key word according to a time axis from the inputted content discrimination data, and to acquire a terminal device display data based on the extracted key word, and to output the acquired terminal device display data; and a remotely controlled terminal device configured to receive the terminal device display data outputted from the service management device, and to display the received terminal device display data on a display screen, and to transmit a response from a viewer for the terminal device display data displayed on the display screen to the service management device, wherein the monitor device displays the content and the terminal device displays the terminal device display data, so that the content and the terminal device display data are respectively displayed on separated devices.

In the detailed information management system of the present invention, the terminal device comprises: an operation interface part configured so that a user currently viewing a content on the monitor device can execute a related information request in order to display information related to a scene currently being viewed of a content currently being viewed on the display screen of the terminal device; a terminal device information transmitting part configured to transmit the related information request executed by the operational interface part to the service management device; and an information receiving/displaying screen production part configured to display a related information in the screen being viewed of the content being viewed, at a time point where the related information request is executed, based on the received terminal device display data.

In the detailed information management system of the present invention, the service management device comprises: a terminal device information management part configured to receive the related information request transmitted from the terminal device information transmitting part of the terminal device; a monitor management device information management part configured to share a content key code of the content currently being viewed, which corresponds to information to identify the content, and the shared time code of the screen being viewed, which corresponds to an indication of a time instant in the content, by transmitting/receiving with the content information management part of the monitor management device, in response to the request from the terminal device information management part, as well as to manage the time code together with the content information management part in real time; a content key code classified related information management device configured to acquire the content key code of the content being viewed, at a time point where the related information request is transmitted from the terminal device information transmitting part of the terminal device, and the shared time code at the time point; and an information retrieval and collection part connected to the content key code classified related information management device, and configured to retrieve and collect information from the Internet and a closed information providing service.

In the detailed information management system of the present invention, the content key code classified related information management device comprises: a content related key word management part configured to manage the content related key word specified by the content key code, by retrieving and collecting the content related key word from the Internet and a closed information providing service and the like, through the information retrieval and collection part; a shared time code classified key word management part configured to discriminate the strength and weakness of relevance with the currently viewing scene, among the content related key word, so as to determine the priority of the display order; a key word classified detail information management part configured to manage a detail information for each key word; and a terminal device-directed display information producing part configured to produce a terminal device display data based on the content related key word to be displayed on the terminal device and the key word classified detail information to be displayed at the time of selecting each key word.

In the detailed information management system of the present invention, the terminal device is configured to extract the key word according to the time axis from the inputted content discrimination data, by using multiple extraction methods, and the shared time code classified key word management part is configured in accordance with priorities which are set to the multiple extraction methods, to discriminate the strength and weaknesses of relevance with the currently viewing scene, among the content related key word, so as to determine priority of the display order.

In the detailed information management system of the present invention, preferably, the service management device further comprises: an advertisement/EC information management part configured to manage an advertisement and an EC information area display data in cooperation with an external advertisement management system and/or an affiliated EC system; a terminal device display data transmission part configured to transmit the advertisement and EC information area display data acquired from the advertisement/EC information management part and the terminal device display data produced by the a terminal device-directed display information producing part to the information receiving/displaying screen production part in the terminal device.

In the detailed information management system of the present invention, preferably, the service management device further comprises: a content key code number issue and management part connected to the monitor management device information management part, and configured to manage a key code for uniquely discriminating a metadata and a content; and a shared time code management part connected to the content key code number issue and management part, and configured to manage a shared time code for each content.

In the detailed information management system of the present invention, preferably, the service management device further comprises: a broadcast and distribution part configured to receive a content from all serviced broadcast stations and internet broadcast stations; and a content data storage and management part connected to the broadcast and distribution part, and configured to store and manage a content data received by the broadcast and distribution part.

### Effect of the present invention

According to the detailed information management system of the present invention, it makes possible to display, in real time, detailed information linked to the viewing scene, on a display of a terminal device such as a remote controller at hand, in a simple operation, for all of live broadcast programs, recorded programs, on-demand content, and package content viewable on a television or the like.

### Brief Description of Figures

Figure 1: A schematic diagram showing a constitution of an embodiment of the detailed information management system according to the present invention.
Figure 2: An operation flow chart of the detailed information management system shown in Figure. 1.
Figure 3: A diagram showing an example of the constitution of data for display on the NEXT remote controller in the detailed information management system shown in Figure. 1.
Figure 4: A diagram showing an example of a key word display on the NEXT remote controller.
Figure 5: A diagram showing an example of the display of query response information for a key word-displayed query in Figure. 4.
Figure 6: Another example of key word display of the NEXT remote controller.
Figure 7: A diagram showing an example of the display of query response information for a key word-displayed query in Figure. 6.
Figure 8: A diagram further showing another example of key word display of the NEXT remote controller.
Figure 9: A diagram showing an example of the display of query response information for a key word-displayed query in Figure. 6.
Figure 10: A diagram further showing another example of key word display of the NEXT remote controller.

### Best Mode for Carrying Out the Invention

In the followings, preferred embodiments of a detailed information management system according to the present invention are described with reference to the attached drawings.

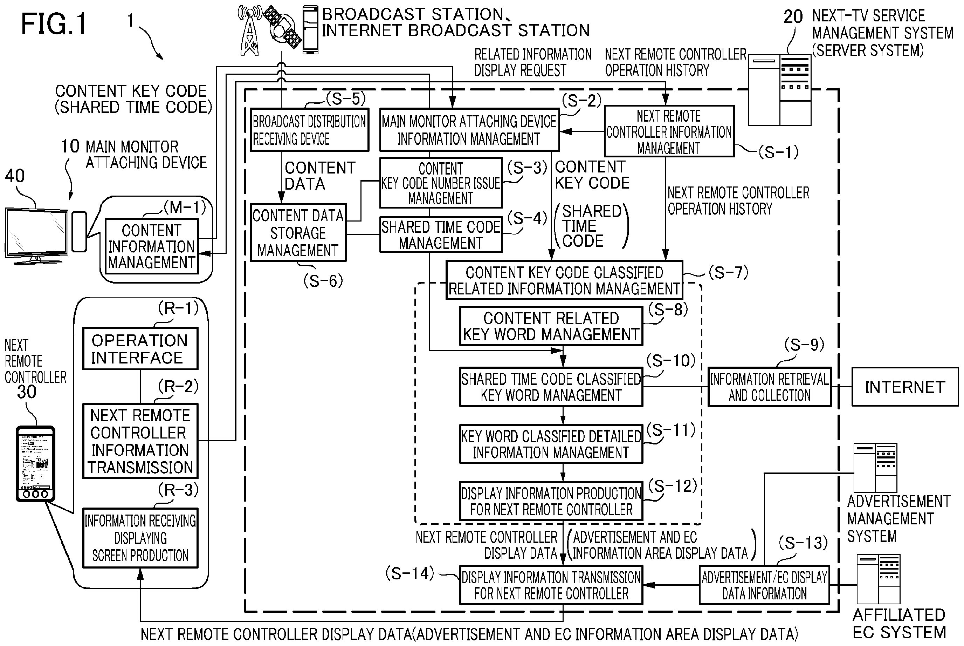

Figure 1 is a schematic diagram showing a constitution of a preferred embodiment of a detailed information management system according to the present invention.

In the following descriptions, (1) a live program on a television and the like, (2) a recorded program on the television and the like, (3) a content of a package software, and (4) a content of VOD and the like are referred to collectively as contents, however, it is apparent that the concept of contents is not limited to these, to the extent needless to explain. A commercial (CM) is also included as one type of a content.

As shown in Figure 1, a detailed information management system 1 comprises:
a main monitor 40, that is a monitor device, configured such that a user (viewer) can view a content;
a main monitor attaching device 10, that is a monitor management device, connected to the main monitor 40, and comprising: a content information management part M-1 configured to obtain a content discriminating data corresponding to a content being viewed by a user, and to output said obtained content distinguishing data;
a NEXT-TV service management system 20, that is a service management device, configured to input the content distinguishing data output from the main monitor attaching device 10, to extract a key word corresponding to a time axis from said input content distinguishing data, to obtain a remote controller display data, that is a terminal device display data, based on the extracted key word, and to output said obtained remote controller display data; and
a NEXT remote controller 30, that is a remotely controlled terminal device, configured to input a remote controller data, that is the terminal device display data output from the NEXT-TV service management system 20, and to display said inputted remote controller display data on a display screen of the display (device), as well as to feed back a response from a viewer for the remote controller display data displayed on the display screen of the display (device) to the NEXT-TV service management system 20.

The NEXT remote controller 30 comprises:
an operation interface part R-1 which is capable of executing a related information request so that the information related to a scene currently being viewed in the content currently being viewed by a use who is viewing the content on the main monitor 40 is to be displayed on the display screen of the NEXT remote controller 30;
a NEXT remote controller information transmission part R-2, that is a terminal device information transmission part configured to transmit the request for related information executed by the operation interface part R-1 to the NEXT-TV service management system 20; and
an information receiving/displaying screen production part R-3, configured to display the related information in a currently viewed scene of a currently viewed content at the point in time where the related information request is executed, based on the received NEXT remote controller display data.

The NEXT-TV service management system 20 comprises:
a NEXT remote controller information management part S-1, that is a terminal device information management part, configured to receive the related information request transmitted from the NEXT remote controller information transmission part R-2 of the NEXT remote controller 30;
a main monitor attaching device information management part S-2, that is a monitor management device information management part, configured to share a content key code in the content currently being viewed and a shared time code in the scene being viewed by transmitting to and receiving from the content information management part M-1 of the main monitor attaching device 10, as well as to manage the time code in real time, in response to the operation of the content information management part M-1, in response to the request or requests from the NEXT remote controller information management part S-1;
a content key code classified related information management device S-7 configured to acquire a content key code in the content being viewed at the time of the transmission of the related information request from the NEXT remote controller information transmission part R-2 of the NEXT remote controller 30 and the shared time code at that time; and
an information retrieval and collection part S-9, connected to the content key code classified related information management device S-7, and configured to retrieve and collect information from the Internet and a closed information providing service.

In the meantime, in the above-described embodiment, it is described that the transmission and reception are carried out directly between the NEXT remote controller 30 and the NEXT-TV service management system 20 without using others, but in a comparative example, it may be configured that the transmission and reception are carried out between the NEXT remote controller 30 and the NEXT-TV service management system 20 through the transmission and reception function of the main monitor attaching device 10 therebetween.

The content key code classified related information management device
S-7 comprises:
a content related key word management part S-8 configured to retrieve/collect and manage the content related key word specified by content key code from the Internet and the closed information providing service, etc. via the information retrieval and collection part S-9;
a shared time code classified key word management part S-10, configured to discriminate the strength or weakness of the relevance to the scene being currently viewed, among the content related key words, and to determine a priority of a display order;
a key word classified detailed information management part S-11 configured to manage a detailed information for each key word; and
a display information production for NEXT remote controller part S-12, that is a display information production part for terminal device, configured to produce a NEXT remote controller display data, that is a terminal device display data, according to the content related key word displayed on the NEXT remote controller 30, and the key word classified detailed information to be displayed when selecting each key word.

The NEXT-TV service management system 20 further comprises:
an advertisement/EC information management part S-13 configured to manage an advertisement and an EC information area display data in cooperation with an external advertisement management system and/or an affiliated EC system; and
a display data transmission part for NEXT remote controller S-14, that is a data transmission part for terminal device display, configured to transmit the advertisement and EC information area display data obtained from the advertisement/EC information management part S-13 and the NEXT remote controller display data produced by the display information production for NEXT remote controller part S-12 to the information receiving/displaying screen production part R-3 of the NEXT remote controller 30.

The NEXT-TV service management system 20 further comprises:
a content key code number issue/management part S-3, connected to the main monitor attaching device information management part S-2, and configured to manage the key code for uniquely identifying the metadata (information including the broadcasting organization which supplies the content, the channel name, the time and date of broadcast, the title, etc.), and the content; and
a shared time code management part S-4, connected to content key code number issue/management part S-3, and configured to manage a shared time code for each content.

Then, the NEXT-TV service management system 20 further comprises:
a broadcast distribution receiving part S-5 configured to receive the content from all serviced broadcast stations and internet broadcast stations; and
a content and data storage and management part S-6, connected to the broadcast distribution receiving part S-5, and configured to store and manage the content data received by the broadcast distribution and receiving part S-5.

Next, the detailed configurations and operations of the aforementioned main monitor attaching device 10, the aforementioned NEXT-TV service management system 20, and the aforementioned NEXT remote controller 30, are described, respectively.

If the user who is viewing the content on the main monitor 40 would request the related information by the operation interface part R-1 of NEXT remote controller 30 in order to display on the screen of NEXT remote controller 30 the information related to the scene currently being viewed in the content currently being viewed, then the request for related information is transmitted to the NEXT-TV service management system 20 by the NEXT remote controller information transmission part R-2 of NEXT remote controller 30.

The NEXT remote controller information management part S-1 of NEXT-TV service management system 20 receives the request for related information transmitted from the NEXT remote controller 30, and makes a request, using the main monitor attaching device information management part S-2 of NEXT-TV service management system 20, so that the content key code in the content currently being viewed and the shared time code for the scene being viewed are transmitted to the content information management part M-1 of main monitor attaching device 10.

The main monitor attaching device information management part S-2 of the NEXT-TV service management system 20 links the content key code for the content currently being viewed and the shared time code for the scene currently being viewed with the content information management part M-1 of main monitor attaching device 10, so as to manage them in real time.

At the time point where the request for related information is transmitted by a user (viewer), the content key code for the content being viewed and the shared time code at that time are sent to the content key code classified related information management device S-7.

In the content key code classified related information management device S-7 of NEXT-TV service management system 20, the related key word for content identified by the content key word in the content-related key word management part S-8 are collected, acquired, and managed by the Internet and closed information providing service via the information retrieval and collection part S-9.

In the shared time code classified key word management part S-10, the strength or weakness of relevance to the scene currently being viewed is discriminated among the aforementioned content related key word, and then a display order priority is determined.

The detailed information for each key word managed by the key word classified detailed information management part S-11 is collected, acquired, and managed in the information retrieval and collection part S-9.

In the display information production for NEXT remote controller part S-12, the NEXT remote controller display data is produced from the content related key word displayed on the NEXT remote controller 30, and the key word classified detailed information to be displayed when each key word is selected.

The produced NEXT remote controller display data is transmitted together with the advertisement and EC information area display data from the advertisement/EC information management part S-13 in coordinated with the external advertisement management system or the affiliated EC system, to the information receiving/displaying screen production part R-3 of NEXT remote controller 30, by the NEXT remote controller display data transmission part S-14.

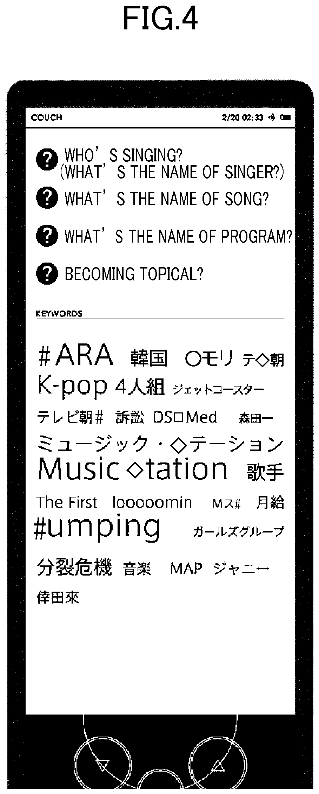

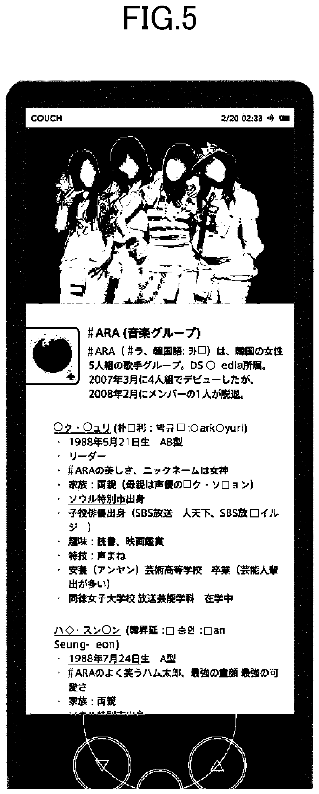

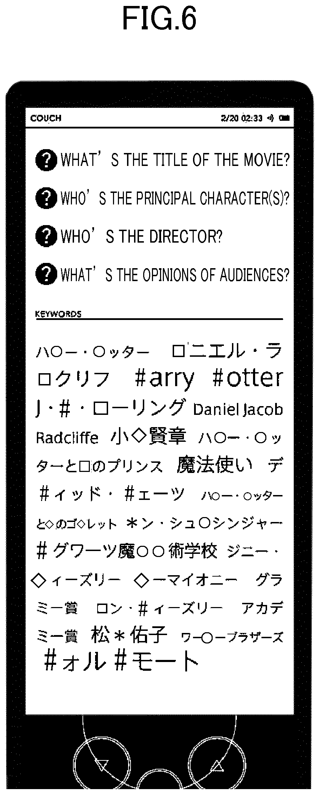

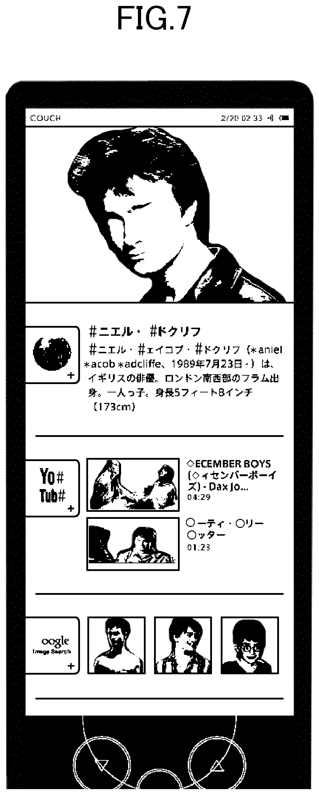

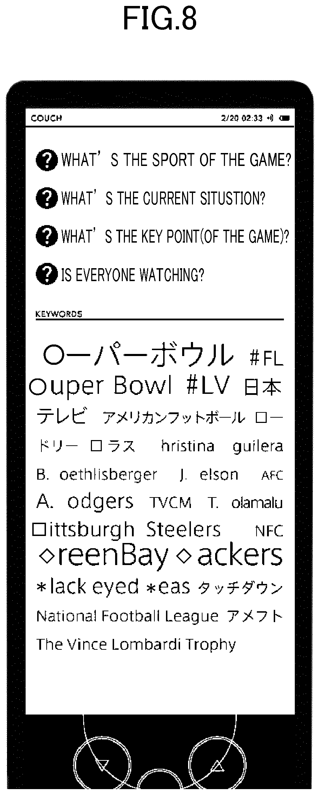

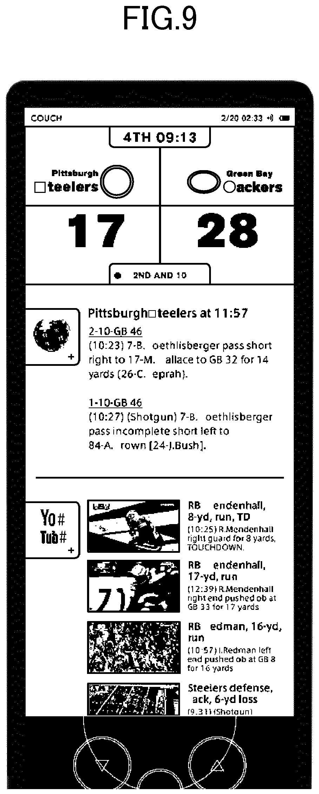

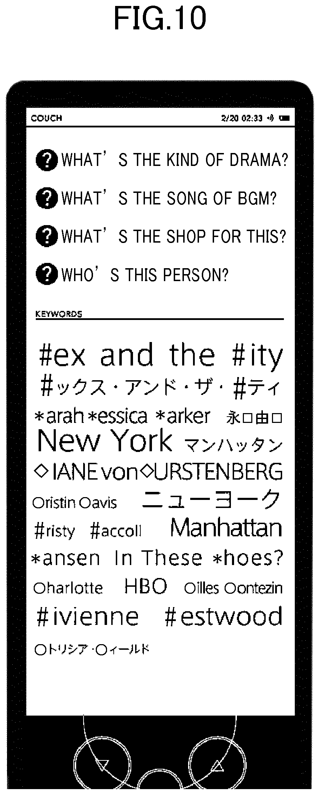

As the method of displaying a key word to the NEXT remote controller 30, it may be configured to not only simply display key word, but also prepare in advance one, two, or more queries anticipated as the ones which are desirable to know (the answers thereof) by the user (viewer), pertaining to the scene being viewed, and if such queries were selected, then the information responsive to queries such as the key word, the images, etc. are displayed in the form which answers such queries, as respectively exemplified in Figures 4 through 10.

For example, at the time point where a related information request is made, the queries such as the following are displayed on the display screen of NEXT remote controller 30:
(q1) "What's the name of this song?"
(q2) "Who is this?"
(q3) "Where is this scene?"
(q4) "Is this becoming topical?"
etc., and by respectively selecting from the above, key word corresponding to the following are displayed:
(a1) Information about a song playing in the current scene;
(a2) Information about cast members appearing in the current scene;
(a3) Information about the location of the current scene;
(a4) Social media comment information; etc.

On the NEXT remote controller 30, there is displayed the related information in the scene being viewed within the content being viewed as of the time when the related information request is made.

The operation history of the related information displayed on the NEXT remote controller 30 (e.g., the information such as what key word details were viewed at what timing and for how long) is transmitted to the NEXT remote controller information management part S-1 of NEXT-TV service management system 20 by the NEXT remote controller information transmission part R-2, through the operation interface part R-1.

The received NEXT remote controller operating history is sent to the content key code classified related information management device S-7, and is used as the factor for determination of the display priority of key word and/or key word classified detailed information.

Now, the content key code is described.

When starting a live viewing of content, or starting a recording, the metadata (information including the broadcasting organization which supplies the content, the channel name, the time and date of broadcast, the title, etc.), which enables to discriminate the content being viewed, is transmitted by the content information management part M-1 of main monitor attaching device 10 to the main monitor attaching device information management part S-2 of NEXT-TV service management system 20, and the same content is discriminated by comparing it with the metadata held by the content key code number issue/management part S-3, so as to obtain the content key code.

If the same content were not registered in the content key code number issue/management part S-3, then a new content key code is issued.

Then, the obtained content key code is sent to the content information management part M-1 of main monitor attaching device 10, and is stored together with the metadata by associating it with the corresponding content.

Next, the shared time code is described.

When starting the live viewing of content, or starting the recording, the content key code and the viewing start time or the recording start time are transmitted to the main monitor attaching device information management part S-2 of NEXT-TV service management system 20 by the content information management part M-1 of the main monitor attaching device 10, and by comparing it with the shared time code management part S-4 managed for each content, a shared time code is obtained in coordination with a timeline of content currently being viewed or recorded. The obtained shared time code is sent to the content information management part M-1 of main monitor attaching device 10, and a shared timeline is stored as being linked to the corresponding content timeline.

Herein, an option is described.

The NEXT-TV service management system 20 also assumes to receive the content in the broadcast distribution receiving part S-5 from all broadcast stations and internet broadcast stations in service, and stores and manages the content data in the content data storage/management part S-6. As the result of this, it enables to discriminate the content key code from an analysis of content video data. In addition, because the shared time code can be given in coordination with the digital image data for each scene in the content, it is configured that the shared time code can be immediately discriminated if the content data currently being viewed would be transmitted from the main monitor attaching device 10.

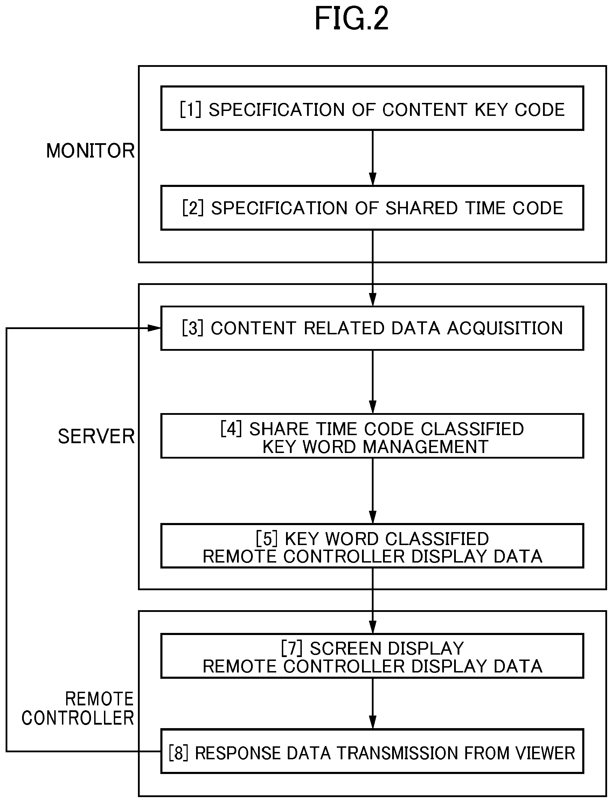

Next, the concrete operations of detailed information management system 1 shown in Figure 1 under the various cases are described with reference to the flow chart shown in Figure 2.

### (1) In case of viewing a live program:

### (1) - 1 Specification of the Content key code

On the main monitor attaching device 10 side
(a) The main monitor attaching device 10 obtains the broadcast program providing infrastructure information (terrestrial broadcasting, satellite broadcasting, cable TV, Internet broadcasting) to the user, from the reception setting information of the main monitor 40.
   (a-1) In case of terrestrial broadcasting
      The main monitor attaching device 10 obtains the information about the area being viewed from the reception setting information of the main monitor 40.
   (a-2) In case of satellite broadcasting, cable TV, and Internet broadcasting:

   The main monitor attaching device 10 obtains the providing service name from the reception setting information of the main monitor 40.
(b) The main monitor attaching device 10 obtains the official public program information (SI information) of all broadcasting organizations, from the official program information providing service organizations or the broadcasting organizations which provide the official public program information through a broadcast wave, a wire circuit, or a wireless circuit, and stores it in the content information management part M-1.
(c) The main monitor attaching device 10, picks up and manages the content discriminating information (broadcasting organization's name, channel name, date and time of broadcasting, and program's title, etc.) which uniquely discriminates the program currently being viewed, among the official program information (SI information, by the content information management part M-1.

On the NEXT-TV service management system 20 side

The NEXT-TV service management system 20 obtains all official program information (SI information) from the official program information providing services or broadcasting organizations, through a broadcast wave, a wire circuit, or a wireless circuit, and stores it, by the content data storage /management part S-6.

The NEXT-TV service management system 20 uniquely discriminates the content by the content discriminating information (program providing infrastructure name, broadcasting organization's name, channel name, date and time of broadcast, program's title) among the official program information (SI information), and issues the content key code which is unique to each content, and stores and manages it together with the official program information, by the content key code number issue/management part (S-3).

On the main monitor attaching device 10 side and the NEXT-TV service management system 20 side,
(a) With respect to the program (i.e., content) currently being viewed, the content discriminating information on the main monitor attaching device 10 side is compared with the content discriminating information on the NEXT-TV service management system 20 side, and the content key code issued by the content key code number issue/management part S-3 of NEXT-TV service management system 20 are stored in the content information management part M-1 of main monitor attaching device 10.
(b) The content key code currently being viewed are stored and managed according to the receiver ID by the content key code number issue/management part S-3 on the NEXT-TV service management system 20 side.

### (1) - 2 Specification of time code

On the NEXT-TV Service Management System 20 side
(a) For each content (program), the shared time code which is counted from the starting time of program is produced and stored by the shared time code management part S-4 of NEXT-TV service management system 20.
(b) When the official time code is provided by the broadcasting wave, or the wire/wireless circuits from the broadcasting organization and the like, the aforementioned official time code is deemed to be a shared time code.

The main monitor attaching device 10 side

The main monitor attaching device 10 associates the shared time code synchronized with the NEXT-TV service management system 20 side with each scene, and stores the same in the content information management part M-1, by regularly measuring an error in the display time for the same scene between the main monitor attaching device 10 and the NEXT-TV service management system 20 side, and correcting the error.

### (1) - 3 Acquisition of content related data

The content key code classified related information management device S-7 of NEXT-TV service management system 20 accesses to the related program web pages, the program information services, the EPG services, and the like through the Internet and/or an intranet from the information retrieval and collection part S-9, and extracts the following information as much as possible:
(a) Cast members (including role), narrators, voice actors;
(b) Songs used (title song, BGM);
(c) Production staff (producer, director, scriptwriter, stylist, etc.);
(d) Locations, studios;
(e) Sponsors;
(f) In the case of sports: past results, records; and
(g) Related information which will serve as the key word in the words extracted from the closed captions.

### (1) - 4 Key word extraction according to the time axis

### Assumptions (shared):

According to the aforementioned (1) - 1 through (1) - 3, the content key code, the shared time code, and the content related data, which specify the program currently being viewed are respectively managed on the NEXT-TV service management system 20 side.

On the NEXT-TV service management system 20 side, the key word is extracted, as shown below, in the multiple layers for each time axis, according to the shared time code, by the shared time code classified key word management part S-10:
A. Key word having a high relation to the current or immediately preceding scene.
B. Key word which seems to have a relation to the current or immediately preceding scene.
C. Key word which seems to have a relation to the scenes other than the current or immediately preceding scene.
D. Key word related to an overall content, but not having a relation to any particular scene, specifically.

Note that the aforementioned time axis relation layer is not limited to 4 stages; it is possible, by finely setting the degree of relation, to divide each stage into two or more multiple stages.

For the current or immediately preceding scene, the aforementioned time axis relations A-D are respectively determined according to the following method for each content related data:
(a) Cast members (including role), narrators, voice actors
   (i) When the information about the cast members, narrators, and/or voice actors for each time axis is provided in advance by the broadcasting organization:
      The cast member information, the narrator information, and the voice actor information pertaining to the scene being broadcasted currently or immediately before are extracted from the information for each time axis which is provided in advance by the broadcasting organization, by the key word classified detailed information management part S-11 of content key code classified related information management device S-7 in NEXT-TV service management system 20.
   (ii) When the scenario (script) information is provided in advance using the broadcasting organization:
      A corresponding scene in the scenario information is discriminated from the current lines (audio or closed caption), by the key word classified detailed information management part S-11 of the content key code classified related information management device S-7 in NEXT-TV service management system 20, and then, the cast member information, the narrator information, and the audio information pertaining to the scene being broadcast currently or immediately before are extracted from the scenario information about such scene.
   (iii) The cast members, the narrators, and the voice actors are recognized by the facial recognition of cast members on the screen, or the voice recognition or the voiceprint analysis of voice actors, by the key word classified detailed information management part S-11 of the content key code classified related information management device S-7 in NEXT-TV service management system 20, and then the cast member information, the narrator information, and the audio information pertaining to the current or immediately preceding scene are extracted based on such information.
   (iv) The broadcast is linked to the time-of-broadcast produced metadata providing service which provides the metadata pertaining to each scene while watching the live (broadcasting).

The time-of-broadcast produced metadata providing service organization sets up the scene(s) in which the start time and the end time are explicitly defined by the shared time code, and stores the time-of-broadcast produced metadata pertaining to the scene(s) in a time-of-broadcast (produced) metadata server (not shown). The content key code classified related information management device S-7 of NEXT-TV service management system 20 extracts the cast member information, the narrator information, the voice actor information, pertaining to the scene being broadcasted currently or immediately before, and the time-of-broadcast produced metadata of the scene which is the most close to the current scene, from the aforementioned time-of-broadcast produced metadata server. Because a time lag occurs between the shared time code relating to the scenes of the information obtainable from the time-of-broadcast produced metadata server and the shared time code for the scene currently being viewed, the information about the time length of the time lag is also stored as the time lag information in the key word classified detailed information management part S-11 of content key code classified related information management device S-7 in NEXT-TV service management system 20.

For the cast members, the narrator, and the voice actors in the content related data extracted in advance by the aforementioned 3 (i.e., in the aforementioned (1) - 3), the time axis relations A through D are determined based on the cast member information, the narrator information, and the voice actor information pertaining to the scene being broadcast currently or immediately before, which are extracted in the aforementioned (i) through the aforementioned (iv).

For example, the information, which is determined by all or three of the extraction methods of the aforementioned (i) through (iv) as pertaining to the current or immediately before scene, is determined as a time axis relation A.

The information, which is determined by any one or two of the extraction methods of the aforementioned (i) through (iv) as pertaining to the current or immediately before scene, is determined as a time axis relation B.

The information, which is not determined as pertaining to the current or immediately before scene by any of the aforementioned extraction methods (i) through (iv), and which is also determined as pertaining to the scenes other than the current or immediately before scene, is determined as a time axis relation C.

The Information, which is determined as being relevant at a constant rate regardless the scene, by the extraction methods of the aforementioned (i) through (iv), is determined as the time axis relation D.

For the information which is not included in the content related data extracted in advance, if there were the information extracted in the aforementioned (i) through (iv), then the information is additionally registered as one of the content related data, and the time axis relation is determined for each scene.

If the information extracted in the aforementioned (i) through (iv) were different, then the priorities of the aforementioned (i) through (iv) are set according to the content, and the time axis relations A through D are determined by an eclectic algorithm based on the priorities.

In the above described example, the aforementioned (i) through (iv) are treated equally, but a method according to the invention is such that, by setting the priorities in each of the extraction methods, the information, which is determined to have a relevance in a high priority extraction method, is determined as the time axis relation A, whereas the information, which is determined to have a relevance only in a low priority extraction method, is determined as the time axis B.

In the meantime, the priorities and the algorithms are regularly tuned according to the results such as the rate of information selection on the user's NEXT remote controller 30 after the broadcast, and/or the number of clicks of the "MISTAKE" button indicating an error from the user.

For example, in the extraction method which extracts the information with the high rate of information selection in the User's NEXT remote controller 30, the priority becomes higher, whereas in the extraction method which extracts the information with a large number of clicks of the "MISTAKE" button, the priority becomes lower.

### (b) Song used

(i) When the information of song used for each time axis is provided in advance by the broadcasting organization:
   If the information pertaining to a current or immediately before scene were provided, then such information is extracted as the information of song used.
(ii) When the scenario (script) information is provided in advance by the broadcasting organization:
   The corresponding scene in the scenario information is discriminated from the current lines (audio or closed caption), and the presence or absence of information for the song used is confirmed. If there were the information, then it is extracted as the song used, in the current or immediately before scene.
(iii) If the song playing in the scene currently being viewed could be discriminated by the voice recognition of the song, then it is extracted as the information of song used, in the current or immediately before scene.
(iv) The broadcast is linked to the time-of-broadcast produced metadata providing service which provides the metadata pertaining to each scene while watching the broadcast in live.

The time-of-broadcast produced metadata providing service organization sets up scenes in which the start time and the end time are explicitly defined by the shared time code, and stores the time-of-broadcast produced metadata pertaining to the scene(s) in a time-of-broadcast (produced) metadata server. The information of song used for the scene closest to the scene currently being viewed is extracted from the aforementioned time-of-broadcast produced metadata server. Because a time lag occurs between the shared time code relating to the scenes in the information obtainable from the time-of-broadcast produced metadata server and the shared time code for the scene currently being viewed, the information about the time length of the lag time is also stored as the time lag information in the key word classified detailed information management part S-11 in the NEXT-TV service management system 20.

Comparing the information of song used for the content related data extracted in advance by the aforementioned 3 (i.e., (1) - 3) with the information of song used extracted in the aforementioned (i) through (iv), the information of song used corresponding to the current or immediately before scene is determined, together with the specific way of using the song (a title song, a theme song, a performed song, etc).

If the information extracted in the aforementioned (i) through (iv) were different, then the priorities of the aforementioned (i) through (iv) are set according to the content, and the information of song used is determined by an eclectic algorithm based on the priorities.

In the meantime, the priority and the algorithm are regularly tuned, according to the result after the broadcast.

### (c) Location(s)

(i) When the location information for each time axis is provided in advance by the broadcasting organization:
   If the information about a current or immediately before scene were provided, then such information is extracted as the location information.
(ii) When the scenario (script) information is provided in advance by the broadcasting organization:
   The corresponding scene in the scenario information is discriminated from the current lines (dialogues) (voice or closed caption), and the presence or absence of information about the location is confirmed. If there were the information, then it is extracted as the location information of the current or immediately before scene.
(iii) If the position information linked to the photographed screen could be obtained by the position information (GPS information) providing system for the camera used for photographing, then the location is determined by such position information, and is extracted as the location information for the current or immediately before scene.
(iv) The broadcast is linked to the time-of-broadcast produced metadata providing service which provides the metadata pertaining to each scene while watching the broadcast in live.

The time-of-broadcast produced metadata providing service organization sets up scenes in which the start time and the end time are explicitly defined by the shared time code, and stores the time-of-broadcast produced metadata pertaining to the scene(s) in a time-of-broadcast (produced) metadata server. The location information for the scene closest to the scene currently being viewed is extracted from the aforementioned time-of- broadcast produced metadata server. Because a time lag occurs between the shared time code relating to the scenes in the information obtainable from the time-of-broadcast produced metadata server and the shared time code for the scene currently being viewed, the information about the time length of the lag time is also stored as the time lag information in the key word classified detailed information management part (S-11) in the NEXT-TV service management system 20.

Comparing the location information for the content related data extracted in advance by the aforementioned 3 (i.e., (1) - 3) with the location information extracted by the aforementioned (i) through (iv), the location information corresponding to the scene being viewed currently or immediately before is, if possible, determined together with the latitude and longitude information.

If the information extracted in the aforementioned (i) through (iv) are different, then the priorities among the aforementioned (i) through (iv) are set according to the content, and the location information is determined by an eclectic algorithm based on the priorities.

In the meantime, the priority and the algorithm are regularly tuned according to the results after the broadcast.

Similarly, for the fashion information of cast members, and the products (goods, automobiles, etc.) used on the program, it is also extracted as the information pertaining to the current or immediately before scene, if it would be possible.

The following contents 5, 6, 7, and 8 are the common items in (1) through (4) (i.e., (1) - 5, (2) - 5, (3) - 5, etc.).
(1) - 5 Acquisition of remote controller display data based on key word, and
(1) - 6 Transmission to remote controller

The NEXT remote controller-directed display information generating part S-12 in content key code classified related information management device S-7 of NEXT-TV service management system 20 produces the NEXT remote controller display data from the content related key word displayed on the NEXT remote controller 30 and the key word classified detailed information displayed when each key word is selected.

The NEXT remote controller display data transmission part S-14 in the content key code classified related information management device S-7 of the NEXT-TV service management system 20 transmits the aforementioned produced NEXT remote controller display data, together with the advertisement and EC information area display data from the advertisement/EC information management part S-13, in coordination with an external advertisement management system or an affiliated EC system, to the information receiving/displaying screen production part R-3 of the NEXT remote controller 30.

The NEXT remote controller 30 displays the related information in the scene currently being viewed of the content currently being viewed, at the time point where the related information request is executed, based on the received NEXT remote controller display data, by the information receiving/displaying screen production part R-3 of the NEXT remote controller 30.

The NEXT remote controller information transmission part R-2 of NEXT remote controller 30 transmits an operation history of the related information displayed on the NEXT remote controller 30 (the information such as what key word details were viewed at what timing and for how long) to the NEXT remote controller information management part S-1 of NEXT-TV service management system 20, through the operation interface part R-1.

The NEXT remote controller information management part S-1 of NEXT-TV service management system 20 transmits the received NEXT remote controller operation history to the content key code classified related information management device S-7, and utilizes it as the factor in determining the display priority of the key word and/or key word classified detailed information, etc.

Examples of the related information content to be acquired, based on the key word:
(a) In case of the cast members (including name of role), narrators, voice actors:
   (i) Image data for the cast members, etc.
   (ii) Movie data for the cast members, etc.
   (iii) Profiles and biographies of the cast members, etc. (including productions in which cast member appeared, awards received, etc.)
   (iv) EC information pertaining to the cast members
   (v) Representative productions of the cast members, etc. (in some cases may include the ranking information)
   (vi) Word with a high relevance to the cast members, etc. (including other cast members, production names)
   (vii) Comments, evaluations by professionals about the cast members, etc.
   (viii) Comments, evaluations by ordinary people about the cast members, etc. (content of writings to social media, etc.)
   (ix) Comments, evaluations by acquaintances about the cast members, etc.
      (coordinated with social graphing service of social media to which the viewer subscribes)
   (x) Comments by the cast members, etc. (content of writings to social media, etc.)
(b) In case of the songs used:
   (i) Voice data for the song
   (ii) Movie data relating to the song
   (iii) EC information pertaining to the song
   (iv) Copyright holders of the song, performers (for the subject song used), producer, selling company, other performers of the same song
   (v) History of the song, ranking trends, etc.
   (vi) Other representative songs by the copyright holder or performer
   (vii) Word or words with high relevance to the song (including other song names)
   (viii) Comments, editorials, evaluations by professionals about the songs
   (ix) Comments, evaluations by ordinary people about the songs
      (content of writings to social media, etc.)
   (x) Comments, evaluations by acquaintances about the songs
      (coordinated with social graphing services of social media to which the viewer subscribes)
   (xi) Comments by cast members or performers (content of writings to social media, etc.)
(c) In case of the location
   (i) Position data of the location (position on map, address, latitude and longitude)
   (ii) Image data of the location
   (iii) Movie data of the location
   (iv) Guides, history, popular stores, tourist spots, lodging facilities, access means for the location
   (v) EC information about the location (purchase methods, purchase sites, etc. for transportation, lodging)
   (vi) Word or words with a high relevance to the location (including other regions)
   (vii) Comments, evaluations by professionals about the location
   (viii) Comments, evaluations by ordinary people about the location
      (content of writings to social media, etc.)
   (ix) Comments, evaluations by acquaintances about the locations
      (coordinated with social graphing service of social media to which the viewer subscribes)
   (x) Comments by persons connected to the location
      (content of writings to social media, etc.)
(d) In case of production staff:
   (i) Image data about the production staff
   (ii) Movie data about the production staff
   (iii) Profiles and biographies of the production staff (including productions and award history)
   (iv) EC information pertaining to the production staff
   (v) Representative productions of the production staff (in some cases may include ranking information)
   (vi) Word or words with high relevance to the production staff (including other production staff, production names)
   (vii) Comments, evaluations by professionals about the production staff
   (viii) Comments, evaluations by ordinary people about the production staff
      (content of writings to social media, etc.)
   (ix) Comments, evaluations by acquaintances about the production staff
      (coordinated with social club services of social media to which the viewer subscribes)
   (x) Comments by the production staff
      (content of writing to social media, etc.)

Examples of the sources of acquisition of information pertaining to the key word or words
(i) Internet official websites related to Internet key word or words
(ii) Internet retrieval services (e.g., Google, Yahoo, etc.)
(iii) Internet video sharing services (e.g., YouTube, etc.)
(iv) Internet image sharing services (e.g., Flickr, etc.)
(v) Internet online encyclopedia services (e.g., Wikipedia, etc.)
(vi) Internet social media services (e.g., Facebook, twitter, mixi, etc.)
(vii) Broadcasting organizations, content holders
(viii) Closed (membership-based) information providing services

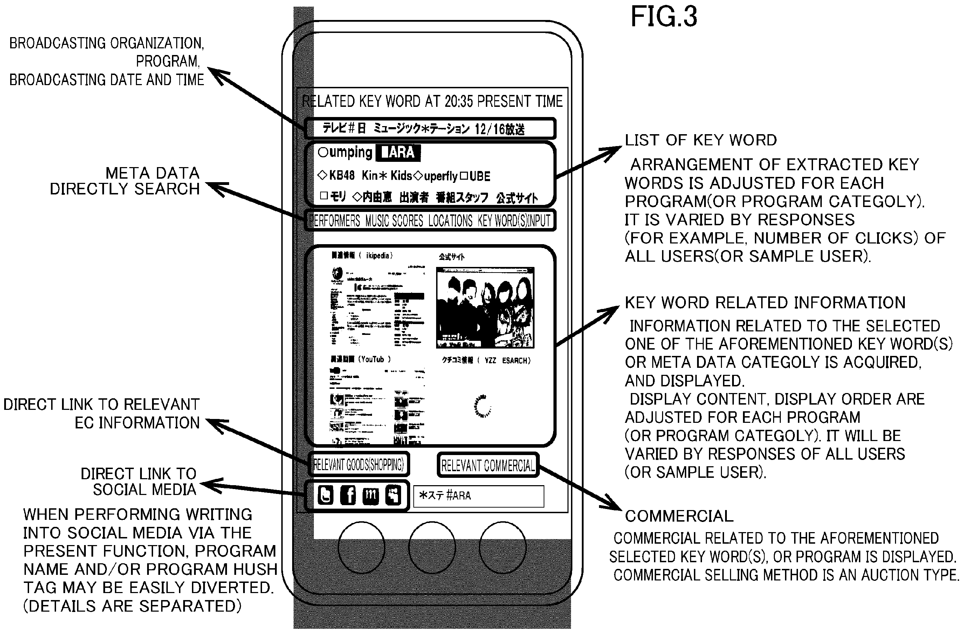

### (1) - 7 Screen Display of remote controller display data (see Figure. 3)

### (1) - 8 Transmission of response data from viewers

The following response activity data in the User's NEXT remote controller 30 (the user utilizing this service) is transmitted to the NEXT-TV service management system 20, together with the operated shared time code, affecting the display content in the NEXT remote controller 30.
(i) Key word selection count, selection timing, time stayed.
(i) Key word related information selection count, selection timing, time stayed.
(iii) Selection metadata, selection timing by the metadata direct links
(iv) Input word or words, input timing in the retrieval key word input column
(v) Writing content and writing timing to social media, respectively affect the following content:
   Content and ordering of the key word or words
   Content and ordering of the key word or words related information

### (2) In case of viewing a recorded program

### (2) - 1 Specification of content key code

On the main monitor attaching device 10 side
(a) At a time of a program recording, the information specifying the program being recorded is exchanged with the NEXT-TV service management system 20 side by the same method as the one in the aforementioned (1) live program viewing time, and the content key code which is numbering issued by the content key code number issue/management part S-3 on the NEXT-TV service management system 20 side are stored.
(b) Since there are the cases where the multiple programs are simultaneously stored in the same video recording file, the content key code is recorded for each time code of the video recording file.
(c) When viewing a video recording program, the content key code currently being viewed and the shared time code (see below) are synchronized so as to share the information at all times, from the content information management part M-1 of main monitor attaching device 10, relative to the main monitor attaching device information management part S-2 of NEXT-TV service management system 20.

### (2) - 2 Specification of time code

On NEXT-TV service management system 20 side
(a) The shared time code which is counted from the start of the program are produced and stored for each content (program), by the shared time code management part (S-4) of NEXT-TV service management system 20.
(b) When the official time code is provided by the broadcasting organization and the like by the broadcast wave or the wire/wireless circuit, the aforementioned official time code is deemed a shared time code.

On the main monitor attaching device 10 side
(a) At a time of a program recording, the shared time code is recorded in the content information management part M-1 for each frame, by the same method as the one in the aforementioned (1) live program viewing time, separately from the video recording time code which is counted from the start time of video recording.
(b) Even if a trick play such as a fast forward, a rewind, or a skip were performed, the shared time code corresponding to that frame is transmitted to the NEXT-TV service management system 20.

On the NEXT-TV service management system 20 side

At a time of a recording program viewing, the content key code for a program currently being viewed and the shared time code for the screen currently being watched are transmitted as needed from the main monitor attaching device 10 to the NEXT-TV service management system 20, and are respectively managed by the content key code number issue/management part S-3 and the shared time code management part S-4.

### (2) - 3 Acquisition of content related data

The content key code classified related information management device S-7 of NEXT-TV service management system 20 accesses the related program webpages, the EPG services, and the like, from the information retrieval/collect part S-9, through the Internet or an intranet, and extracts the following information as much as possible.
(a) Cast members (including role), narrators, voice actors
(b) Songs used (title song, BGM)
(c) Production staff (producer, director, scriptwriter, stylist, etc.)
(d) Locations, studios
(e) Sponsors
(f) In the case of sports: past results, records
(g) Related information which will serve as the key word or words among the words extracted from the closed captions
(h) Ratings, number of viewers (by time of day)
(i) Social media comment information, about program
(j) Key word or words, related information, related news, which are added after the end of program

### (2) - 4 Extraction of key word or words according to the time axis

For a scene currently being viewed, the aforementioned time axis relations A - D are respectively determined according to the following method(s) for each content related data:
(a) Cast members (including role), narrators, voice actors
   (i) When the information about the cast members, the narrators, and/or the voice actors for each time axis is provided in advance by the broadcasting organization:
      The cast member information, the narrator information, and the voice actor information pertaining to the scene currently being viewed are extracted from the information for each time axis, which is provided in advance by the broadcasting organization, by the key word classified detailed information management part S-11 of content key code classified related information management device S-7 of NEXT-TV service management system 20.
   (ii) When the scenario (script) information is provided in advance by the broadcasting organization:
      The corresponding scene in the scenario information is discriminated from the current lines (dialogues) (audio or closed caption), by the key word classified detailed information management part S-11 of content key code classified related information management device S-7 of NEXT-TV service management system 20, and the cast member information, the narrator information, and the audio information pertaining to the scene currently being viewed are extracted from the scenario information about the scene.
   (iii) The cast members, the narrators, and the voice actors are recognized by the facial recognition of the cast members on the screen, or the voiceprint analysis of the cast member, the narrators, the voice actors, and then, the cast member information, the narrator information, and the audio information, corresponding to the scene currently being viewed (specified by the shared time code) are extracted based on such information, by the key word classified detailed information management part S-11 of the content key code classified related information management device S-7 in NEXT-TV service management system 20.
   (iv) The broadcast is linked to the time-of-broadcast produced metadata providing service which provides the metadata pertaining to each scene, while watching the live.

The time-of-broadcast produced metadata providing service organization sets up the scenes in which the start time and the end time are explicitly specified by the shared time code, and stores the time-of-broadcast produced metadata pertaining to the scenes in the time-of-broadcast metadata server (not shown). The content key code classified related information management device S-7 of NEXT-TV service management system 20 extracts the cast member information, the narrator information, and the voice actor information pertaining to the scene currently being viewed from the aforementioned time-of-broadcast produced metadata server.

For the cast members, the narrators, and the voice actors in the content related data extracted in advance by the aforementioned 3 (i.e., in (2) - 3), the time axis relations A through D are determined based on the cast member information, the narrator information, and the voice actor information, pertaining to the scene currently being viewed, which were extracted in the aforementioned (i) through (iv).

For example, the information which is determined as being relevant to the scene currently being viewed by all or three of the extraction methods of the aforementioned (i) through (iv) is determined as the time axis relation A.

The information which is determined as being relevant to the scene currently being viewed, by any one or two of the extraction methods of the aforementioned (i) through (iv) is determined as the time axis relation B.

The information which is not determined as being relevant to the scene currently being viewed by any of the extraction methods of the aforementioned (i) through (iv), and which is determined as being relevant to the scenes other than the scene currently being viewed, is determined as the time axis relation C.

For the information which is not included in the content related data extracted in advance, if there were the information extracted in the aforementioned (i) through (iv), then the information is additionally registered as one of the content related data, and the time axis relation is determined for each scene.

If the information extracted in the aforementioned (i) through (iv) were different, then the priorities of the aforementioned (i) through (iv) are set according to the content, and the time axis relations A through D are determined by an eclectic algorithm based on the priorities.

In the example described above, the aforementioned (i) through (iv) are treated equally, however, setting the priority in each of the extraction methods, there may be the methods such that the information which is determined to have the relevance by the high priority extraction method is determined as the time axis relation A, while the information which is determined to have the relevance by only the low priority extraction method is determined as the time axis relation B.

In the meantime, the priority and the algorithm are regularly tuned according to the results such as the rate of information selection on the user's NEXT remote controller 30 after the broadcast, and/or the number of clicks of the "MISTAKE" button indicating an error from the user.

For example, in the extraction method which extracts the information with the high rate of information selection in the user's NEXT remote controller 30, the priority becomes higher, whereas in the extraction method which extracts the information with a large number of clicks of the "MISTAKE" button, the priority becomes lower.

### (b) Songs Used

(i) When the information of song used for each time axis is provided in advance by the broadcasting organization:
   If the information pertaining to the scene currently being viewed were provided, then such information is extracted as the information of song used.
(ii) When the scenario (script) information is provided in advance by a broadcasting organization:
   The corresponding scene in the scenario information is discriminated from the current lines (audio or closed caption), and the presence or absence of information for the song used is confirmed. If there were the information, then it is extracted as the song used, in the current or immediately before scene.
(iii) If the song playing in the scene currently being viewed could be discriminated by the voice recognition of the song, then it is extracted as the information of song used, in the current or immediately before scene.
(iv) The broadcast is linked to the time-of-broadcast produced metadata providing service which provides the metadata pertaining to each scene while watching the broadcast in live.

The time-of-broadcast produced metadata providing service organization sets up scenes in which the start time and the end time are explicitly defined by the shared time code, and stores the time-of-broadcast produced metadata pertaining to the scene(s) in a time-of-broadcast (produced) metadata server. The information of song used for the scene closest to the scene currently being viewed is extracted from the aforementioned time-of-broadcast produced metadata server. Because a time lag occurs between the shared time code relating to the scenes in the information obtainable from the time-of-broadcast produced metadata server and the shared time code for the scene currently being viewed, the information about the time (length) of the lag time is also stored as the time lag information in the key word classified detailed information management part S-11 in the NEXT-TV service management system 20.

Comparing the information of song used for the content related data extracted in advance by the aforementioned 3 (i.e., (1) - 3) with the information of song used extracted in the aforementioned (i) through (iv), the information of song used corresponding to the scene currently being viewed is determined, together with the specific way of using the song (a title song, a theme song, a performed song, etc).

If the information extracted in the aforementioned (i) through (iv) were different, then the priorities of the aforementioned (i) through (iv) are set according to the content, and the (information of) song used is determined by an eclectic algorithm based on the priorities.

In the meantime, the priority and the algorithm are regularly tuned, according to the result after the broadcast.

### (c) Location(s)

(i) When the location information for each time axis is provided in advance by the broadcasting organization:
   If the information about the scene currently being viewed were provided, then such information is extracted as the location information.
(ii) When the scenario (script) information is provided in advance by the broadcasting organization:
   The corresponding scene in the scenario information is discriminated from the current lines (voice or closed caption), and the presence or absence of information about the location is confirmed. If there were the information, then it is extracted as the location information of the scene currently being viewed.
(iii) If the position information linked to the photographed screen could be obtained by the position information (GPS information) providing system for the camera used for photographing, then the location is determined by such position information, and is extracted as the location information for the scene currently being viewed.
(iv) The broadcast is linked to the time-of-broadcast produced metadata providing service which provides the metadata pertaining to each scene while watching the broadcast in live.

The time-of-broadcast produced metadata providing service organization sets up the scenes in which the start time and the end time are explicitly defined by the shared time code, and stores the time-of-broadcast produced metadata pertaining to the scene(s) in a time-of-broadcast (produced) metadata server. The location information for the scene closest to the scene currently being viewed is extracted from the aforementioned time-of- broadcast produced metadata server. Because a time lag occurs between the shared time code relating to the scenes in the information obtainable from the time-of-broadcast produced metadata server and the shared time code for the scene currently being viewed, the information about the time length of the lag time is also stored as the time lag information in the key word classified detailed information management part S-11 in the NEXT-TV service management system 20.

Comparing the location information for the content related data extracted in advance by the aforementioned 3 (i.e., (1) - 3) with the location information extracted by the aforementioned (i) through (iv), the location information corresponding to the scene currently being viewed is, if possible, determined together with the latitude and longitude information.

If the information extracted in the aforementioned (i) through (iv) are different, then the priorities among the aforementioned (i) through (iv) are set according to the content, and the location information is determined by an eclectic algorithm based on the priorities.

In the meantime, the priority and the algorithm are regularly tuned according to the results after the broadcast.

Similarly, for the fashion information of cast members, and the products (goods, automobiles, etc.) used on the program, it is also extracted as the information pertaining to the current or immediately before scene, if it would be possible.
(2) - 5 Acquisition of remote controller display data based on key word or words, and
(2) - 6 Transmission to remote controller

### (2) - 7 Screen display of remote controller display data

### (2) - 8 Transmission of response data from viewer or viewers

Regarding each of these items, each of the corresponding items in the aforementioned (1) should be referred to.

### (3) When viewing a packaged software

### (3) - 1 Specification of content key code

On main monitor attaching device 10 side

The information specifying the software content, which is recorded as the metadata on the packaged software, such as the vender's name, the vender's number-issuing ID, the title of work, the production company's name, the distribution company's name, the production country's name, the year released, the year packaged, etc., is transmitted to the NEXT-TV service management system 20 side.

On the NEXT-TV service management system 20 side
(a) It is determined whether or not the same content is already registered in the content data storage/management part S-6 of NEXT-TV service management system 20, based on the information sent from the main monitor attaching device 10.
(b) If it would be already registered content, then it is managed by content data storage/management part S-6, based on the already numbered content key code.
(c) If it would be not already registered content, then a new content key code is issued by the content key code number issue/management part S-3, and is managed.
(d) If it would be a new content, then the movie data of the content is uploaded to the content data storage/management part S-6 of NEXT-TV service management system 20, and is stored and managed.

### (3) - 2 Specification of time code

On the NEXT-TV service management system 20 side and the main monitor attaching device 10 side

The time code recorded in the packaged software are recorded and managed, as the shared time code, by the shared time code number issue/management part S-4 of NEXT-TV service management system 20.

### (3) - 3 Acquisition of content related data

The content key code classified related information management device S-7 of NEXT-TV service management system 20, accesses the related program webpages, the program information services, the EPG services, and the like, from the information retrieval/collect part S-9, based on the official information of the packaged software, through the Internet and/or an intranet, and extracts the following information as much as possible:
(a) Cast members (including roles), narrators, and voice actors;
(b) Songs used (title song, BGM);
(c) Production staff (producer, director, scriptwriter, stylist, etc.);
(d) Locations, studios; and
(e) Social media comment information about content.

### (3) - 4 Key word or words extraction according to the time axis

For the scene currently being viewed, the aforementioned time axis relations A - D are respectively determined, for each content related data, by the following methods:
(a) Cast members (including role), narrators, voice actor
   (i) When the information about the cast members, narrators, and/or voice actors for each time axis is provided in the package or other method from the packaged software providing organization or the software production company, etc.:
      The cast member information, the narrator information, and the voice actor information pertaining to the scene currently being viewed are extracted from the information for each time axis which is provided in advance from the packaged software providing organization or the software production company, by the key word classified detailed information management part S-11 of content key code classified related information management device S-7 in NEXT-TV service management system 20.
   (ii) When the scenario (script) information is provided in advance from the packaged software providing organization or the software production company, etc.:
      The corresponding scene in the scenario information is discriminated from the current lines (audio or closed caption), by the key word classified detailed information management part S-11 of the content key code classified related information management device S-7 in NEXT-TV service management system 20, and then, the cast member information, the narrator information, and the audio information pertaining to the scene currently being viewed are extracted from the scenario information about such scene.
   (iii) The broadcast is linked to the packaged software metadata providing service (organization) which provides the metadata pertaining to each scene while watching the packaged software.

The packaged software metadata providing service organization sets up the scene(s) in which the start time and the end time are explicitly defined by the shared time code, and stores the packaged software metadata pertaining to the scene(s) in a packaged software metadata server (not shown). The content key code classified related information management device S-7 of NEXT-TV service management system 20 extracts the cast member information, the narrator information, the voice actor information, pertaining to the scene currently being viewed, from the aforementioned packaged software metadata server.

For the cast members, the narrator, and the voice actors in the content related data extracted in advance by the aforementioned 3 (i.e., in the aforementioned (3) - 3), the time axis relations A through D are determined based on the cast member information, the narrator information, and the voice actor information pertaining to the scene currently being viewed, which are extracted in the aforementioned (i) through the aforementioned (iii).

For example, the information, which is determined by all or three of the extraction methods of the aforementioned (i) through (iv) as pertaining to the scene currently being viewed, is determined as the time axis relation A.

The information, which is determined by any one or two of the extraction methods of the aforementioned (i) through (iv) as pertaining to the scene currently being viewed, is determined as the time axis relation B.

The information, which is not determined as pertaining to the scene currently being viewed by any of the aforementioned extraction methods (i) through (iv), and which is also determined as pertaining to the scenes other than the scene currently being viewed, is determined as the time axis relation C.

Then, the Information, which is determined as being relevant at a constant rate regardless the scene, by the extraction methods of the aforementioned (i) through (iv), is determined as the time axis relation D.

For the information which is not included in the content related data extracted in advance, if there were the information extracted in the aforementioned (i) through (iv), then the information is additionally registered as one of the content related data, and the time axis relation is determined for each scene.

If the information extracted in the aforementioned (i) through (iv) were different, then the priorities of the aforementioned (i) through (iv) are set according to the content, and the time axis relations A through D are determined by an eclectic algorithm based on the priorities.

In the above described example, the aforementioned (i) through (iv) are treated equally, but there may be a method such that, by setting the priorities in each of the extraction methods, the information, which is determined to have a relevance in a high priority extraction method, is determined as the time axis relation A, whereas the information, which is determined to have a relevance only in a low priority extraction method, is determined as the time axis relation B.

In the meantime, the priority and the algorithm are regularly tuned according to the results such as the rate of information selection on the user's NEXT remote controller 30 after the broadcast, and/or the number of clicks of the "MISTAKE" button indicating an error from the user.

For example, in the extraction method which extracts the information with the high rate of information selection in the NEXT remote controller 30 of the user, the priority becomes higher, whereas in the extraction method which extracts the information with a large number of clicks of the "MISTAKE" button, the priority becomes lower.

### (b) Songs Used

(i) When the information of song used for each time axis is provided in the package or other method, from the packaged software providing organization or the software production company, etc.:
   If the information pertaining to the scene currently being viewed were provided, then such information is extracted as the information of song used.
(ii) When the scenario (script) information is provided from the packaged software providing organization or the software production company, etc.:
   The corresponding scene in the scenario information is discriminated from the current lines (audio or closed caption), and the presence or absence of information for the song used is confirmed. If there were the information, then it is extracted as the song used, in the scene currently being viewed.
(iii) If the song playing in the scene currently being viewed could be discriminated by the voice recognition of the song, then it is extracted as the information of song used, in the scene currently being viewed.
(iv) The broadcast is linked to the packaged software metadata providing service (organization) which provides the metadata pertaining to each scene while watching the packaged software.

The packaged software metadata providing service organization sets up scenes in which the start time and the end time are explicitly defined by the shared time code, and stores the packaged software metadata pertaining to the scene(s) in a packaged software metadata server. The information of song used for the scene closest to the scene currently being viewed is extracted from the aforementioned packaged software metadata server. Because a time lag occurs between the shared time code relating to the scenes in the information obtainable from the packaged software metadata server and the shared time code for the scene currently being viewed, the information about the time (length) of the lag time is also stored as the time lag information in the key word classified detailed information management part S-11 in the NEXT-TV service management system 20.

Comparing the information of song used for the content related data extracted in advance by the aforementioned 3 (i.e., (3) - 3) with the information of song used extracted in the aforementioned (i) through (iv), the information of song used corresponding to the scene currently being viewed (specified by the shared time code) is determined, together with the specific way of using the song (a title song, a theme song, a performed song, etc).

If the information extracted in the aforementioned (i) through (iv) were different, then the priorities of the aforementioned (i) through (iv) are set according to the content, and the (information of) song used is determined by an eclectic algorithm based on the priorities.

In the meantime, the priority and the algorithm are regularly tuned, according to the result after the broadcast.

### (c) Location(s)

(i) When the location information for each time axis is provided in the package or other method, from the packaged software providing organization or the software production company, etc.:
   If the information about the scene currently being viewed were provided, then such information is extracted as the location information.
(ii) When the scenario (script) information is provided, from the packaged software providing organization or the software production company, etc.:
   The corresponding scene in the scenario information is discriminated from the current lines (dialogues) (voice or closed caption), and the presence or absence of information about the location is confirmed. If there were the information, then it is extracted as the location information of the scene currently being viewed.
(iii) If the position information linked to the photographed screen could be obtained by the position information (GPS information) providing system for the camera used for photographing, then the location is determined by such position information, and is extracted as the location information for the scene currently being viewed.
(iv) The broadcast is linked to the packaged software metadata providing service (organization) which provides the metadata pertaining to each scene while watching the packaged software.

The packaged software metadata providing service organization sets up the scene(s) in which the start time and the end time are explicitly defined by the shared time code, and stores the packaged software metadata pertaining to the scene(s) in the time-of-broadcast metadata server. The location information for the scene closest to the scene currently being viewed is extracted from the aforementioned time-of-broadcast metadata server. Because a time lag occurs between the shared time code relating to the scenes in the information obtainable from the time-of-broadcast produced metadata server and the shared time code for the scene currently being viewed, the information about the time length of the lag time is also stored as the time lag information in the key word classified detailed information management part S-11 in the NEXT-TV service management system 20.

Comparing the location information for the content related data extracted in advance by the aforementioned 3 (i.e., (3) - 3) with the location information extracted by the aforementioned (i) through (iv), the location information corresponding to the scene currently being viewed is, if possible, determined together with the latitude and longitude information.

If the information extracted in the aforementioned (i) through (iv) are different, then the priorities among the aforementioned (i) through (iv) are set according to the content, and the location information is determined by an eclectic algorithm based on the priorities.

In the meantime, the priority and the algorithm are regularly tuned according to the results after the broadcast.

Similarly, for the fashion information of cast members, and the products (goods, automobiles, etc.) used on the program, it is also extracted as the information pertaining to the current or immediately before scene, if it would be possible.
(3) - 5 Acquisition of remote controller display data based on key word or words, and
(3) - 6 Transmission to remote controller
(3) - 7 Screen display of remote controller display data
(3) - 8 Transmission of response data from viewer or viewers

Regarding each of these items, each of the corresponding items in the aforementioned (1) should be referred to.

### (4) When viewing a VOD service

### (4) - 1 Specification of content key code

On the main monitor attaching device 10 side

The main monitor attaching device 10 sends the information specifying the make up of content, such as the VOD organization's name, the content code number-issuing by the organization, the file name, the title name, the production company's name, the distributing company's name, the producing country name, the year produced, etc., which serves as the official content information by the VOD organization, to the NEXT-TV service management system 20 side.

On the NEXT-TV service management system 20 side
(a) It is determined whether or not the same content is already registered in the content data storage/management part S-6 of NEXT-TV service management system 20, based on the information sent from the main monitor attaching device 10.
(b) If it would be already registered content, then it is managed by content data storage/management part S-6, based on the already numbered content key code.
(c) If it would be not already registered content, then a new content key code is issued by the content key code number issue/management part S-3, and is managed.
(d) If it would be a new content, then the movie data of the content is uploaded to the content data storage/management part S-6 of NEXT-TV service management system 20, and is stored and managed.

### (4) - 2 Specification of time code

On the NEXT-TV service management system 20 side and the main monitor attaching device 10 side

The time code recorded in the movie file of VDC are recorded and managed, as the shared time code, by the shared time code number issue/management part S-4 of NEXT-TV service management system 20.

### (4) - 3 Acquisition of content related data

The content key code classified related information management device S-7 of NEXT-TV service management system 20 accesses the related program webpages, the program information services, the EPG services, and the like, from the information retrieval/collect part S-9, based on the official content information by the VOD organization, through the Internet and/or an intranet, and extracts the following information as much as possible:
(a) Cast members (including roles), narrators, and voice actors;
(b) Songs used (title song, BGM);
(c) Production staff (producer, director, scriptwriter, stylist, etc.);
(d) Locations, studios; and
(e) Social media comment information about content.

### (4) - 4 Key word or words extraction according to the time axis

For the scene currently being viewed, the aforementioned time axis relations A - D are respectively determined, for each content related data, by the following methods:
(a) Cast members (including role), narrators, voice actor
   (i) When the information about the cast members, narrators, and/or voice actors for each time axis is provided in the video file of VOD file or other method from the VOD service providing organization or the software production company, etc.:
      The cast member information, the narrator information, and the voice actor information pertaining to the scene currently being viewed are extracted from the information for each time axis which is provided in advance from the VOD service providing organization or the software production company, etc., by the key word classified detailed information management part S-11 of content key code classified related information management device S-7 of NEXT-TV service management system 20.
   (ii) When the scenario (script) information is provided from the VOD service providing organization, or the software production company, etc.:
      The corresponding scene in the scenario information is discriminated from the current lines (audio or closed caption), by the key word classified detailed information management part S-11 of the content key code classified related information management device S-7 in NEXT-TV service management system 20, and then, the cast member information, the narrator information, and the audio information pertaining to the scene currently being viewed are extracted from the scenario information about such scene.
   (iii) The cast members, the narrators, and the voice actors are recognized by the facial recognition of cast members on the screen, or the voiceprint analysis of the cast members, the narrators, the voice actors, and then the cast member information, the narrator information, and the audio information pertaining to the scene currently being viewed are extracted based on such information.
   (iv) The broadcast is linked to the VOD metadata providing service (organization) which provides the metadata pertaining to each scene while watching the VOD service.

The VOD metadata providing service organization sets up the scene(s) in which the start time and the end time are explicitly defined by the shared time code, and stores the VOD metadata pertaining to the scene(s) in a VOD metadata server. The content key code classified related information management device S-7 of NEXT-TV service management system 20 extracts the cast member information, the narrator information, the voice actor information, corresponding to the scene currently being viewed, from the aforementioned VOD metadata server.

For the cast members, the narrator, and the voice actors in the content related data extracted in advance by the aforementioned 3 (i.e., in the aforementioned (4) - 3), the time axis relations A through D are determined based on the cast member information, the narrator information, and the voice actor information pertaining to the scene currently being viewed, which are extracted in the aforementioned (i) through the aforementioned (iii).

For example, the information, which is determined by all or three of the extraction methods of the aforementioned (i) through (iv) as pertaining to the scene currently being viewed, is determined as the time axis relation A.

The information, which is determined by any one or two of the extraction methods of the aforementioned (i) through (iv) as pertaining to the scene currently being viewed, is determined as the time axis relation B.

The information, which is not determined as pertaining to the scene currently being viewed by any of the aforementioned extraction methods (i) through (iv), and which is also determined as pertaining to the scenes other than the scene currently being viewed, is determined as the time axis relation C.

Then, the Information, which is determined as being relevant at a constant rate (in definite proportions) regardless the scene, by the extraction methods of the aforementioned (i) through (iv), is determined as the time axis relation D.

For the information which is not included in the content related data extracted in advance, if there were the information extracted in the aforementioned (i) through (iv), then the information is additionally registered as one of the content related data, and the time axis relation is determined for each scene.

If the information extracted in the aforementioned (i) through (iv) were different, then the priorities of the aforementioned (i) through (iv) are set according to the content, and the time axis relations A through D are determined by an eclectic algorithm based on the priorities.

In the above described example, the aforementioned (i) through (iv) are treated equally, but there may be a method such that, by setting the priorities in each of the extraction methods, the information, which is determined to have a relevance in a high priority extraction method, is determined as the time axis relation A, whereas the information, which is determined to have a relevance only in a low priority extraction method, is determined as the time axis B.

In the meantime, the priorities and the algorithms are regularly tuned according to the results such as the rate of information selection on the user's NEXT remote controller 30 after the broadcast, and/or the number of clicks of the "MISTAKE" button indicating an error from the user.

For example, in the extraction method which extracts the information with the high rate of information selection in the User's NEXT remote controller 30, the priority becomes higher, whereas in the extraction method which extracts the information with a large number of clicks of the "MISTAKE" button, the priority becomes lower.

### (b) Songs Used

(i) When the information of song used for each time axis is provided, from the VOD service providing organization or the software production company, etc.:
   If the information pertaining to the scene currently being viewed were provided, then such information is extracted as the information of song used.
(ii) When the scenario (script) information is provided from the VOD service providing organization or the software production company, etc.:
   The corresponding scene in the scenario information is discriminated from the current lines (audio or closed caption), and the presence or absence of information for the song used is confirmed. If there were the information, then it is extracted as the song used, in the scene currently being viewed (specified by the shared time code).
(iii) If the song playing in the scene currently being viewed could be discriminated by the voice recognition of the song, then it is extracted as the information of song used, in the scene currently being viewed.
(iv) The broadcast is linked to the VOD metadata providing service (organization) which provides the metadata pertaining to each scene while watching the VOD service.

The VOD metadata providing service organization sets up scenes in which the start time and the end time are explicitly defined by the shared time code, and stores the VOD metadata pertaining to the scene(s) in a VOD metadata server. The information of song used for the scene closest to the scene currently being viewed is extracted from the aforementioned VOD metadata server. Because a time lag occurs between the shared time code relating to the scenes in the information obtainable from the VOD metadata server and the shared time code for the scene currently being viewed, the information about the time (length) of the lag time is also stored as the time lag information in the key word classified detailed information management part S-11 in the NEXT-TV service management system 20.

Comparing the information of song used for the content related data extracted in advance by the aforementioned 3 (i.e., (4) - 3) with the information of song used extracted in the aforementioned (i) through (iv), the information of song used corresponding to the scene currently being viewed (specified by the shared time code) is determined, together with the specific way of using the song (a title song, a theme song, a performed song, etc).

If the information extracted in the aforementioned (i) through (iv) were different, then the priorities of the aforementioned (i) through (iv) are set according to the content, and the (information of) song used is determined by an eclectic algorithm based on the priorities.

In the meantime, the priority and the algorithm are regularly tuned, according to the result after the broadcast.

### (c) Location(s)

(i) When the location information for each time axis is provided in the VOD movie file or other method, from the VOD service providing organization or the software production company, etc.:
   If the information about the scene currently being viewed were provided, then such information is extracted as the location information.
(ii) When the scenario (script) information is provided, from the VOD service providing organization or the software production company, etc.:
   The corresponding scene in the scenario information is discriminated from the current lines (voice or closed caption), and the presence or absence of information about the location is confirmed. If there were the information, then it is extracted as the location information of the scene currently being viewed.
(iii) If the position information linked to the photographed screen could be obtained by the position information (GPS information) providing system for the camera used for photographing, then the location is determined by such position information, and is extracted as the location information for the scene currently being viewed.
(iv) The broadcast is linked to the VOD metadata providing service (organization) which provides the metadata pertaining to each scene while watching the VOD service.

The VOD metadata providing service organization sets up the scene(s) in which the start time and the end time are explicitly defined by the shared time code, and stores the VOD metadata pertaining to the scene(s) in the VOD metadata server. The location information for the scene closest to the scene currently being viewed is extracted from the aforementioned VOD metadata server. Because a time lag occurs between the shared time code relating to the scenes in the information obtainable from the VOD metadata server and the shared time code for the scene currently being viewed, the information about the time length of the lag time is also stored as the time lag information in the key word classified detailed information management part S-11 in the NEXT-TV service management system 20.

Comparing the location information for the content related data extracted in advance by the aforementioned 3 (i.e., (4) - 3) with the location information extracted by the aforementioned (i) through (iv), the location information corresponding to the scene currently being viewed is, if possible, determined together with the latitude and longitude information.

If the information extracted in the aforementioned (i) through (iv) are different, then the priorities among the aforementioned (i) through (iv) are set according to the content, and the location information is determined by an eclectic algorithm based on the priorities.

In the meantime, the priority and the algorithm are regularly tuned according to the results after the broadcast.

Similarly, for the fashion information of cast members, and the products (goods, automobiles, etc.) used on the program, it is also extracted as the information pertaining to the current or immediately before scene, if it would be possible.
(4) - 5 Acquisition of remote controller display data based on key word or words, and
(4) - 6 Transmission to remote controller
(4) - 7 Screen display of remote controller display data
(4) - 8 Transmission of response data from viewer or viewers

Regarding each of these items, each of the corresponding items in the aforementioned (1) should be referred to.

### Description of Reference Numerals

- 1: Detailed information management system
- 10: Main monitor attaching device
- 20: NEXT-TV service management system
- 30: NEXT remote controller
- 40: Main monitor

## Claims

1. A detailed information management system, comprising:
a monitor device configured to view a content;
a monitor management device comprising a content information management part connected to said monitor device, and configured to acquire a content discrimination data corresponding to a content being viewed by a user on said monitor device, and to output said acquired content discrimination data;
a service management device configured to input said content discrimination data outputted from said monitor management device, and to extract a key word according to a time axis from said inputted content discrimination data, and to acquire a terminal device display data based on said extracted key word, and to output said acquired terminal device display data; and
a remotely controlled terminal device configured to receive said terminal device display data outputted from said service management device, and to display said received terminal device display data on a display screen, and to transmit a response from a viewer for said terminal device display data displayed on said display screen to said service management device, wherein the monitor device displays the content and the terminal device displays the terminal device display data, so that the content and the terminal device display data are respectively displayed on separated devices,
wherein said terminal device comprises:
an operation interface part configured so that a user currently viewing a content on said monitor device can execute a related information request in order to display information related to a scene currently being viewed of a content currently being viewed on said display screen of said terminal device;
a terminal device information transmitting part configured to transmit said related information request executed by said operational interface part to said service management device; and
an information receiving/displaying screen production part configured to display a related information in the screen being viewed of the content being viewed, at a time point where said related information request is executed, based on said received terminal device display data, and wherein said service management device comprises:
a terminal device information management part configured to receive said related information request transmitted from said terminal device information transmitting part of said terminal device;
a monitor management device information management part configured to share a content key code of the content currently being viewed, which corresponds to information to identify the content, and a shared time code of the screen being viewed, which corresponds to an indication of a time instant in the content, by transmitting/receiving with said content information management part of said monitor management device, in response to the request from said terminal device information management part, as well as to manage the time code together with the content information management part in real time;
a content key code classified related information management device configured to acquire the content key code of the content being viewed, at a time point where said related information request is transmitted from said terminal device information transmitting part of said terminal device, and the shared time code at said time point; and
an information retrieval and collection part connected to said content key code classified related information management device, and configured to retrieve and collect information from the Internet and a closed information providing service; **characterized in that**
said content key code classified related information management device comprises:
a content related key word management part configured to manage the content related key word specified by said content key code, by retrieving and collecting the content related key word from the Internet and a closed information providing service and the like, through said information retrieval and collection part;
a shared time code classified key word management part configured to discriminate the strength and weakness of relevance with the currently viewing scene, among said content related key word, so as to determine the priority of the display order;
a key word classified detail information management part configured to manage a detail information for each key word; and
a terminal device-directed display information producing part configured to produce a terminal device display data based on the content related key word to be displayed on said terminal device and the key word classified detail information to be displayed at the time of selecting each key word;
wherein the terminal device is configured to extract the key word according to the time axis from the inputted content discrimination data, by using multiple extraction methods, and
wherein the shared time code classified key word management part is configured in accordance with priorities which are set to the multiple extraction methods, to discriminate the strength and weaknesses of relevance with the currently viewing scene, among the content related key word, so as to determine priority of the display order.

2. A detailed information management system according to claim 1, wherein said service management device further comprises:
an advertisement/EC information management part configured to manage an advertisement and an EC information area display data in cooperation with an external advertisement management system and/or an affiliated EC system;
a terminal device display data transmission part configured to transmit said advertisement and EC information area display data acquired from said advertisement/EC information management part and said terminal device display data produced by said a terminal device-directed display information producing part to said information receiving/displaying screen production part in said terminal device.

3. A detailed information management system according to claim 1 or claim 2, wherein said service management device further comprises:
a content key code number issue and management part connected to said monitor management device information management part, and configured to manage a key code for uniquely discriminating a metadata and a content; and
a shared time code management part connected to said content key code number issue and management part, and configured to manage a shared time code for each content.

4. A detailed information management system according to any one of claims 1 - 3, wherein said service management device further comprises:
a broadcast and distribution part configured to receive a content from all serviced broadcast stations and internet broadcast stations; and
a content data storage and management part connected to said broadcast and distribution part, and configured to store and manage a content data received by said broadcast and distribution part.

## Patentansprüche

1. Detailliertes Informationsverwaltungssystem, das Folgendes umfasst:
eine Monitorvorrichtung, die konfiguriert ist, um einen Inhalt zu betrachten;
eine Monitorverwaltungsvorrichtung, die ein Inhaltsinformationsverwaltungsteil umfasst, das mit der Monitorvorrichtung verbunden und konfiguriert ist, um Inhaltsunterscheidungsdaten zu erfassen, die einem Inhalt entsprechen, der durch einen Benutzer auf der Monitorvorrichtung betrachtet wird, und um die erfassten Inhaltsunterscheidungsdaten auszugeben;
eine Dienstverwaltungsvorrichtung, die konfiguriert ist, um die Inhaltsunterscheidungsdaten einzugeben, die von der Monitorverwaltungsvorrichtung ausgegeben werden, und um ein Schlüsselwort gemäß einer Zeitachse aus den eingegebenen Inhaltsunterscheidungsdaten zu extrahieren und um Endgerätanzeigedaten basierend auf dem extrahierten Schlüsselwort zu erfassen und um die erfassten Endgerätanzeigedaten auszugeben; und
ein ferngesteuertes Endgerät, das konfiguriert ist, um die Endgerätanzeigedaten zu empfangen, die von dem Dienstverwaltungsgerät ausgegeben werden, und um die empfangenen Endgerätanzeigedaten auf einem Anzeigebildschirm anzuzeigen und um eine Antwort von einem Betrachter für die Endgerätanzeigedaten, die auf dem Anzeigebildschirm angezeigt werden, auf die Dienstverwaltungsvorrichtung zu übertragen, wobei die Monitorvorrichtung den Inhalt anzeigt und das Endgerät die Endgerätanzeigedaten anzeigt, so dass der Inhalt und die Endgerätanzeigedaten jeweils auf getrennten Vorrichtungen angezeigt werden,
wobei das Endgerät Folgendes umfasst:
ein Betriebsschnittstellenteil, das konfiguriert ist, so dass ein Benutzer, der aktuell einen Inhalt auf der Monitorvorrichtung betrachtet, eine zugehörige Informationsanforderung ausführen kann, um Informationen, die zu einer Szene zugehörig sind, die aktuell betrachtet wird, von einem Inhalt anzuzeigen, der aktuell auf dem Anzeigebildschirm des Endgeräts betrachtet wird;
ein Endgerätinformationsübertragungsteil, das konfiguriert ist, um die zugehörige Informationsanforderung, die durch das Betriebsschnittstellenteil ausgeführt wird, auf die Dienstverwaltungsvorrichtung zu übertragen; und
ein Produktionsteil zum Empfangen/Anzeigen von Informationen, das konfiguriert ist, um eine zugehörige Information auf dem Bildschirm, der betrachtet wird, von dem Inhalt, der betrachtet wird, zu einem Zeitpunkt anzuzeigen, zu dem die zugehörige Informationsanforderung basierend auf den empfangenen Endgerätanzeigedaten ausgeführt wird, und wobei die Dienstverwaltungsvorrichtung Folgendes umfasst:
ein Endgerätinformationsverwaltungsteil, das konfiguriert ist, um die zugehörige Informationsanforderung zu empfangen, die von dem Endgerätinformationsübertragungsteil des Endgeräts übertragen wird;
ein Verwaltungsteil für Monitorverwaltungsvorrichtungsinformationen, das konfiguriert ist, um einen Inhaltsschlüsselcode des Inhalts, der aktuell betrachtet wird, der Informationen, um den Inhalt zu identifizieren, entspricht, und einen geteilten Zeitcode des Bildschirms, der betrachtet wird, der einer Angabe eines Zeitmoments in dem Inhalt entspricht, durch Übertragen/Empfangen mit dem Inhaltsinformationsverwaltungsteil der Monitorverwaltungsvorrichtung als Reaktion auf die Anforderung von dem Endgerätinformationsverwaltungsteil zu teilen sowie um den Zeitcode zusammen mit dem Inhaltsinformationsverwaltungsteil in Echtzeit zu verwalten;
eine Verwaltungsvorrichtung für Inhaltsschlüsselcode-klassifizierte zugehörige Informationen, die konfiguriert ist, um den Inhaltsschlüsselcode des Inhalts, der betrachtet wird, zu einem Zeitpunkt, zu dem die zugehörige Informationsanforderung von dem Endgeräteinformationsübertragungsteil des Endgeräts übertragen wird, und den geteilten Zeitcode zu dem Zeitpunkt zu erfassen; und
ein Teil zum Abruf und zur Sammlung von Informationen, das mit der Verwaltungsvorrichtung für Inhaltsschlüsselcode-klassifizierte zugehörige Informationen verbunden und konfiguriert ist, um Informationen aus dem Internet und einem geschlossenen Informationsbereitstellungsdienst abzurufen und zu sammeln;
**dadurch gekennzeichnet, dass** die Verwaltungsvorrichtung für Inhaltsschlüsselcode-klassifizierte zugehörige Informationen Folgendes umfasst:
ein Verwaltungsteil für zu dem Inhalt zugehörige Schlüsselwörter, das konfiguriert ist, um das zu dem Inhalt zugehörige Schlüsselwort, das durch den Inhaltsschlüsselcode spezifiziert ist, durch Abrufen und Sammeln des zu dem Inhalt zugehörigen Schlüsselworts aus dem Internet und einem geschlossenen Informationsbereitstellungsdienst und dergleichen über das Teil für den Abruf und die Sammlung von Informationen zu verwalten;
ein Verwaltungsteil für geteilten Zeitcode-klassifizierte Schlüsselwörter, das konfiguriert ist, um die relevante Stärke und Schwäche für die aktuell betrachtete Szene unter dem zu dem Inhalt zugehörigen Schlüsselwort zu unterscheiden, um die Priorität der Anzeigereihenfolge zu bestimmen;
ein Schlüsselwort-klassifiziertes Detailinformationsverwaltungsteil, das konfiguriert ist, um Detailinformationen für jedes Schlüsselwort zu verwalten; und
ein durch das Endgerät gelenktes Teil zum Produzieren der Anzeigeinformationen, das konfiguriert ist, um Endgerätanzeigedaten basierend auf dem zu dem Inhalt zugehörigen Schlüsselwort, das auf dem Endgerät angezeigt werden soll, und die Schlüsselwort-klassifizierten Detailinformationen zu produzieren, die zu dem Zeitpunkt eines Auswählens jedes Schlüsselworts angezeigt werden sollen;
wobei das Endgerät konfiguriert ist, um das Schlüsselwort gemäß der Zeitachse aus den eingegebenen Inhaltsunterscheidungsdaten durch Verwenden mehrerer Extraktionsverfahren zu extrahieren, und
wobei das Verwaltungsteil für geteilten Zeitcode-klassifizierte Schlüsselwörter gemäß Prioritäten konfiguriert ist, die auf die mehreren Extraktionsverfahren eingestellt sind, um die relevante(n) Stärke und Schwächen für die aktuell betrachtete Szene unter den zu dem Inhalt zugehörigen Schlüsselwörtern zu unterscheiden, um so die Priorität der Anzeigereihenfolge zu bestimmen.

2. Detailliertes Informationsverwaltungssystem nach Anspruch 1, wobei die Dienstverwaltungsvorrichtung ferner Folgendes umfasst:
ein Werbe-/EC-Informationsverwaltungsteil, das konfiguriert ist, um eine Werbung und EC-Informationsbereichsanzeigedaten in Zusammenarbeit mit einem externen Werbeverwaltungssystem und/oder einem angegliederten EC-System zu verwalten;
ein Endgerätanzeigedatenübertragungsteil, das konfiguriert ist, um die Werbung und EC-Informationsbereichsanzeigedaten, die von dem Werbe-/EC-Informationsverwaltungsteil und den Endgerätanzeigedaten erfasst werden, die durch das durch das Endgerät gelenkte Teil zum Produzieren der Anzeigeinformationen produziert werden, an das Produktionsteil zum Empfangen/Anzeigen von Informationen in dem Endgerät zu übertragen.

3. Detailliertes Informationsverwaltungssystem nach Anspruch 1 oder 2, wobei die Dienstverwaltungsvorrichtung ferner Folgendes umfasst:
ein Inhaltsschlüsselcodenummerausgabe- und -verwaltungsteil, das mit dem Verwaltungsteil für Monitorverwaltungsvorrichtungsinformationen verbunden und konfiguriert ist, um einen Schlüsselcode zum eindeutigen Unterscheiden von Metadaten und einem Inhalt zu verwalten; und
ein Verwaltungsteil für geteilte Zeitcodes, das mit dem Inhaltsschlüsselcodenummerausgabe- und -verwaltungsteil verbunden und konfiguriert ist, um einen geteilten Zeitcode für jeden Inhalt zu verwalten.

4. Detailliertes Informationsverwaltungssystem nach einem der Ansprüche 1-3, wobei die Dienstverwaltungsvorrichtung ferner Folgendes umfasst:
ein Rundfunk- und Verteilungsteil, das konfiguriert ist, um einen Inhalt von allen bedienten Rundfunkstationen und Internetrundfunkstationen zu empfangen; und
ein Inhaltsdatenspeicher- und -verwaltungsteil, das mit dem Rundfunk- und Verteilungsteil verbunden und konfiguriert ist, um Inhaltsdaten zu speichern und zu verwalten, die durch das Rundfunk- und Verteilungsteil empfangen werden.

## Revendications

1. Système de gestion d'informations détaillées, comprenant :
un dispositif de surveillance configuré pour afficher un contenu ;
un dispositif de gestion de surveillance comprenant une partie de gestion d'informations de contenu connectée audit dispositif de surveillance, et configurée pour acquérir des données de discrimination de contenu correspondant à un contenu visualisé par un utilisateur sur ledit dispositif de surveillance, et pour sortir lesdites données de discrimination de contenu acquises ;
un dispositif de gestion de service configuré pour entrer lesdites données de discrimination de contenu sorties dudit dispositif de gestion de surveillance, et pour extraire un mot clé selon un axe temporel desdites données de discrimination de contenu entrées, et pour acquérir des données d'affichage de dispositif terminal sur la base dudit mot clé extrait, et pour sortir lesdites données d'affichage de dispositif terminal acquises ; et
un dispositif terminal commandé à distance configuré pour recevoir lesdites données d'affichage de dispositif terminal sorties dudit dispositif de gestion de service, et pour afficher lesdites données d'affichage de dispositif terminal reçues sur un écran d'affichage, et pour transmettre une réponse d'un visualiseur pour lesdites données d'affichage de dispositif terminal affichées sur ledit écran d'affichage audit dispositif de gestion de service, le dispositif de surveillance affichant le contenu et le dispositif terminal affichant les données d'affichage de dispositif terminal, de sorte que le contenu et les données d'affichage de dispositif terminal sont respectivement affichés sur des dispositifs séparés, ledit dispositif terminal comprenant :
une partie d'interface d'opération configurée de sorte qu'un utilisateur visualisant actuellement un contenu sur ledit dispositif de surveillance peut exécuter une demande d'informations associée afin d'afficher des informations relatives à une scène actuellement visualisée d'un contenu actuellement visualisé sur ledit écran d'affichage dudit dispositif terminal ;
une partie de transmission d'informations de dispositif terminal configurée pour transmettre ladite demande d'informations associée exécutée par ladite partie d'interface opérationnelle audit dispositif de gestion de service ; et
une partie de production d'écran de réception/d'affichage d'informations configurée pour afficher des informations associées dans l'écran en cours de visualisation du contenu en cours de visualisation, au niveau d'un point temporel où ladite demande d'informations associées est exécutée, sur la base desdites données d'affichage de dispositif terminal, et ledit dispositif de gestion de services comprenant :
une partie de gestion d'informations de dispositif terminal configurée pour recevoir ladite demande d'informations associée transmise depuis ladite partie de transmission d'informations de dispositif terminal dudit dispositif terminal ;
une partie de gestion d'informations de dispositif de gestion de surveillance configurée pour partager un code de clé de contenu du contenu en cours de visualisation, qui correspond à des informations pour identifier le contenu, et un code temporel partagé de l'écran en cours de visualisation, qui correspond à une indication d'un instant temporel dans le contenu, en transmettant/recevant avec ladite partie de gestion d'informations de contenu dudit dispositif de gestion de surveillance, en réponse à la demande de ladite partie de gestion d'informations de dispositif terminal, ainsi que pour gérer le code temporel avec la partie de gestion d'informations de contenu en temps réel ;
un dispositif de gestion d'informations associées classées par code de clé de contenu configuré pour acquérir le code de clé de contenu du contenu en cours de visualisation, au niveau d'un point temporel où ladite demande d'informations associée est transmise à partir de ladite partie de transmission d'informations de dispositif terminal dudit dispositif terminal, et le code temporel partagé audit point temporel ; et
une partie d'extraction et de collecte d'informations connectée audit dispositif de gestion d'informations associées classées par code de clé de contenu, et configurée pour récupérer et collecter des informations à partir d'Internet et d'un service de fourniture d'informations fermé ;
**caractérisé en ce que** ledit dispositif de gestion d'informations associées classées par code de clé de contenu comprend :
une partie de gestion de mot clé liée au contenu configurée pour gérer le mot clé lié au contenu spécifié par ledit code de clé de contenu, en récupérant et en collectant le mot clé lié au contenu à partir d'Internet et d'un service de fourniture d'informations fermé et similaire, par le biais de ladite partie de récupération et collecte d'informations ;
une partie de gestion de mot clé classé par code temporel partagé configurée pour discriminer la force et la faiblesse de pertinence par rapport à la scène en cours de visualisation, parmi ledit mot clé lié au contenu, de manière à déterminer la priorité de l'ordre d'affichage ;
une partie de gestion d'informations de détail classées de mot clé configurée pour gérer une information de détail pour chaque mot clé ; et
une partie de production d'informations d'affichage dirigées par le dispositif terminal configurée pour produire des données d'affichage de dispositif terminal sur la base du mot clé lié au contenu à afficher sur ledit dispositif terminal et des informations de détail classées de mot clé à afficher au moment de la sélection de chaque mot clé ;
le dispositif terminal étant configuré pour extraire le mot clé selon l'axe temporel à partir des données de discrimination de contenu entrées, en utilisant plusieurs procédés d'extraction, et la partie de gestion de mot clé classé par code temporel partagé étant configurée conformément à des priorités qui sont réglées sur les multiples procédés d'extraction, pour discriminer la force et les faiblesses de pertinence par rapport à la scène de visualisation en cours, parmi le mot clé lié au contenu, de manière à déterminer la priorité de l'ordre d'affichage.

2. Système de gestion d'informations détaillées selon la revendication 1, dans lequel ledit dispositif de gestion de service comprend en outre :
une partie de gestion de publicité/d'informations EC configurée pour gérer une publicité et des données d'affichage de zone d'informations EC en coopération avec un système de gestion de publicité externe et/ou un système EC affilié ;
une partie de transmission de données d'affichage de dispositif terminal configurée pour transmettre lesdites données d'affichage de zone de publicité et d'informations EC acquises à partir de ladite partie de gestion de publicité/d'informations EC et lesdites données d'affichage de dispositif terminal produites par ladite partie de production d'informations d'affichage dirigée par le dispositif terminal vers ladite partie de production d'écran de réception/d'affichage d'informations dans ledit dispositif terminal.

3. Système de gestion d'informations détaillées selon la revendication 1 ou la revendication 2, dans lequel ledit dispositif de gestion de service comprend en outre :
une partie d'émission et de gestion de numéro de code de clé de contenu connectée à ladite partie de gestion d'informations de dispositif de gestion de surveillance, et configurée pour gérer un code de clé afin de discriminer de manière unique des métadonnées et un contenu ; et
une partie de gestion de code temporel partagé connectée à ladite partie d'émission et de gestion de numéro de code de clé de contenu, et configurée pour gérer un code temporel partagé pour chaque contenu.

4. Système de gestion d'informations détaillées selon l'une quelconque des revendications 1 à 3, dans lequel ledit dispositif de gestion de service comprend en outre :
une partie de diffusion et de distribution configurée pour recevoir un contenu de toutes les stations de diffusion et stations de diffusion Internet desservies ; et
une partie de stockage et de gestion de données de contenu connectée à ladite partie de diffusion et de distribution, et configurée pour stocker et gérer des données de contenu reçues par ladite partie de diffusion et de distribution.
